# EUROPEAN PATENT SPECIFICATION

(11) **EP 2 942 231 B1**
(45) Date of publication and mention of the grant of the patent: **29.06.2022**
(21) Application number: 15166756.5
(22) Date of filing: 07.05.2015
(51) Int. Cl.: B60N 2/22, A47C 1/032, B61D 33/00, B64D 11/06

(54) **RECLINING SEAT**
NEIGUNGSVERSTELLBARER SITZ
SIÈGE INCLINABLE

(30) Priority: 09.05.2014 US 201414273984
(43) Date of publication of application: 11.11.2015
(60) Divisional application: 22174624.1
(73) Proprietor: AMI Industries, Inc., Colorado Springs, CO 80916 (US)
(72) Inventor: Ferguson, Keith M., Colorado Springs, CO 80920 (US); Hoover, Douglas E., Colorado Springs, CO 80907 (US)
(74) Representative: Schmitt-Nilson Schraud Waibel Wohlfrom Patentanwälte Partnerschaft mbB

(56) References cited:
- EP-A1- 0 320 478
- EP-A1- 2 581 260
- WO-A1-2012/043118
- US-A- 5 785 384

## Description

The present disclosure relates generally to seats. More particularly, the present disclosure relates to reclining seats.

Many seats recline for user comfort or other purposes. Typically, the seat back may recline as the seat bottom remains in a fixed position. However, certain situations do not allow the seat back to recline, such as when the seat back is positioned against a wall. In such situations, external mechanisms, such as a 4-bar linkage may be used to assist in reclining.

WO 2012/043118 shows a chair-type massage device in which a seat frame axially supported by a back frame moves forward along an upper guide rail while the back frame moves along a lower guide rail to the side where a back rest falls back, wherein the lower guide rail includes a parallel motion guide for supporting the back frame when the back frame rises. The parallel motion guide of the lower guide rail is arranged parallel to the upper guide rail. When the back frame moves along the parallel motion guide of the lower guide rail, the back frame moves forward together with the seat frame without tilting.

US 5 785 384 shows an adjustable wheelchair, where the back of the chair, at a first mounting site on each side thereof, is pivotally connected to respective side members of the chair, and at a second mounting site forms a hinged connection with a rear part of the chair set frame, where the chair seat frame, at a front mounting site on each side thereof, is slidably connected to a respective side member along a front guide which forms a part of the side member.

EP 2 581 260 shows a seat for passengers of a railway transport vehicle, having a backrest comprising a lower part articulated on a base around a transverse axis and guided in a structural frame formed of an upper crosspiece and upper and lower frames between working and rest positions. An opening angle of the seat defined between the part and the base is greater in the rest position. The lower part includes guiding fingers mounted in guiding grooves of the lower frame. The fingers are arranged to be relocated in the grooves to define an angular position of the part during guiding of the part between the positions.

EP 0 320 478 shows an adjustable chair of a railway compartment, whereby the seat of the chair comprising on each side a rail secured to a front portion under the seat and resting on a pulley connected with the chair frame, the seat being, in the rear portion on each side, connected turnably with a guide secured to the frame where the guide having slideably arranged a first glider, the back comprising a downwards and forwards directed prolongation and being turnably connected with the first glider, the front end of the prolongation being turnably connected with a second glider being slideably arranged on a second guide, the second guide thereby being connected with the frame, and first and second guides.

According to the invention, a seat for an aircraft comprises the features of claim 1. The seat basically comprises a base, a guide ramp, a seat bottom, a seat back, and a spine. The guide ramp is coupled to the base and comprises a guide channel. The seat bottom is coupled to the base via a sliding mechanism. The seat back is pivotably coupled to the seat bottom. The spine is located at least partially within the seat back and the seat bottom. A portion of the spine is located within the guide channel.

The seat may comprise a locking mechanism configured to prevent translating of the seat bottom.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures.
FIG. 1 illustrates a seat in an upright position; and
FIG. 2 illustrates a seat in a reclined position.

The detailed description of an embodiment makes reference to the accompanying drawings, which show an embodiment by way of illustration. The detailed description herein is presented for purposes of illustration only and not of limitation.

Systems and methods are disclosed herein for a reclining seat. The seat comprises a spine within the seat back and the seat bottom. The spine is configured to rotate about a pivot in the seat bottom. A cam follower at a forward end of the spine in the seat bottom is located within a guide ramp. The seat bottom is configured to translate relative to a fixed base. A user may cause the seat bottom to translate forward. As the seat bottom translates forward, the cam follower follows the path of the guide ramp. The path of the guide ramp forces the spine to rotate about the pivot, causing the seat back to recline.

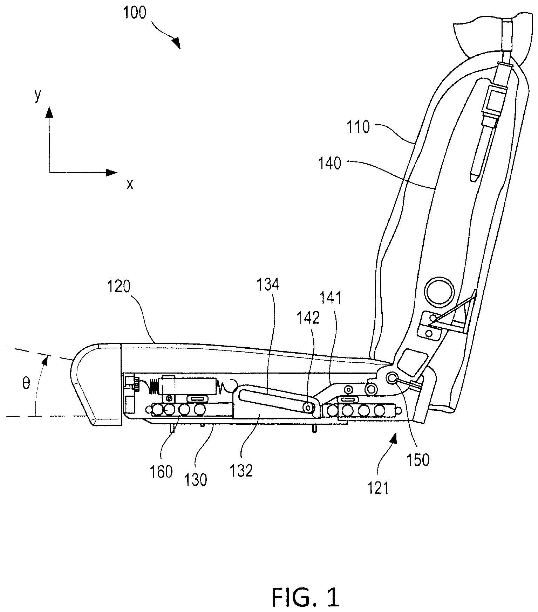

Referring to FIG. 1, a seat 100 is illustrated in an upright position. X-Y axes are shown for ease of illustration, with forward representing the negative X-direction, and up representing the positive y-direction. The seat 100 is a seat for an aircraft. Seat 100 comprises a seat back 110 and a seat bottom 120. Seat bottom 120 is located within a base 130. Base 130 may be fixed to the surrounding environment, such as fixed to a floor beneath seat 100 or a wall adjacent to seat 100.

Seat 100 comprises a spine 140. Spine 140 is located within seat back 110, and at least partially within seat bottom 120. Spine 140 may comprise a rigid material, such as aluminum or a rigid plastic. Spine 140 is fixed relative to seat back 110. Thus, as spine 140 reclines, seat back 110 reclines as well. Spine 140 comprises a cam follower 141. Spine 140 is a unitary component. Spine 140 is configured to rotate about a pivot 150. Pivot 150 is coupled to an aft end 121 of seat bottom 120. Thus, as spine 140 rotates about pivot 150, seat back 110 rotates relative to seat bottom 120.

Seat bottom 120 is configured to translate fore and aft relative to base 130. Seat bottom 120 is coupled to base 130 via a sliding mechanism 160. Seat bottom 120 may be coupled to base 130 via any type of mechanism which allows seat bottom 120 to translate fore and aft relative to base 130, such as mechanisms which include ball bearings or low friction surfaces such as silicone or polytetrafluoroethylene.

Seat 100 comprises a guide ramp 132 coupled to base 130. Guide ramp 132 is configured to remain in a fixed position relative to base 130 as seat bottom translates fore and aft. Guide ramp 132 comprises a guide channel 134. Guide channel 134 may be positioned at an angle θ relative to a direction of translation of seat bottom 120. Cam follower 141 comprises a cam roller 142 which is located within guide channel 134. In response to seat bottom 120 translating in a forward direction, cam roller 142 follows the path of guide channel 134. Guide channel 134 forces cam roller 142 to move away from base 130 in the positive y-direction as seat bottom 120 translates forward. The upward movement of cam roller 142 causes spine 140 to rotate about pivot 150 via cam follower 141. Thus, as seat bottom 120 is translated forward, seat back 110 is forced to recline.

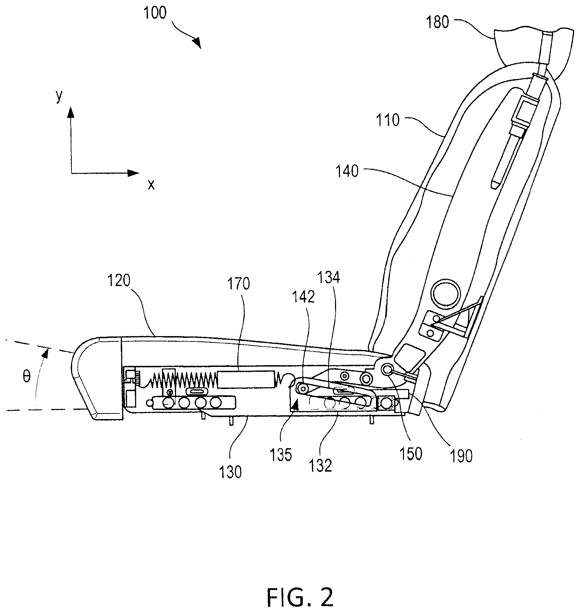

Referring to FIG. 2, seat 100 is illustrated in a reclined position according to the embodiment. In comparison to the upright position shown in FIG. 1, seat bottom 120 has been translated in a forward direction relative to base 130. As seat bottom 120 is translated in the forward direction, seat back 110 and spine 140 are also translated in the forward direction. Cam roller 142 has been translated to a forward end 135 of guide channel 134, which creates a torque on spine 140 about pivot 150, causing seat back 110 to recline.

Seat 100 comprises a return spring 170. Return spring 170 may be coupled to a fixed portion of seat 100, such as guide ramp 132, and a translating portion of seat 100, such as a portion of seat bottom 120. In response to seat bottom 120 translating to the forward position shown in FIG. 2, return spring 170 extends (or in various embodiments, a spring may compress). Thus, absent a counteracting force, return spring 170 causes seat bottom 120 to translate in the aft direction and seat 100 to return to the upright position.

As illustrated, guide channel 134 is linear and positioned at an angle θ of approximately 10° relative to the direction of translation of seat bottom 120. However, guide channel 134 may be positioned at other angles. As the angle θ is increased, back rest 110 will recline further with the same amount of forward translation of seat bottom 120. Guide channel 134 may be curved or have complex shapes, such that the ratio of forward movement to seat back declination changes as seat bottom 120 is translated fore and aft. Seat back 110 may fully recline, such that seat 100 may be used as a bed. Guide ramp 132 may be configured such that head rest 180 does not substantially translate as seat bottom 120 translates. Thus, a user's head may remain in a substantially fixed position relative to surrounding objects, which may include televisions, eating trays, work surfaces, windows, etc.

Seat 100 may comprise a locking mechanism 190 which maintains seat 100 in the upright or reclined position and prevents undesired translating of seat bottom 120. A user may unlock the locking mechanism 190 and cause seat 100 to recline by forcing the seat bottom 120 forward with the user's legs, or by applying rearward pressure on seat back 110 with the user's back. To return seat 100 to the upright position, the user may unlock the locking mechanism 190 and return spring 170 may bring seat 100 back to the upright position. Locking mechanism 190 may comprise a pinch spring coupled to base 130, or otherwise fixed relative to base 130. Pinch spring may be configured to tightly bind around a rod which translates with seat bottom 120. In response to a user unlocking the locking mechanism 190, such as by pressing a button, the pinch spring may loosen around the rod, allowing the rod and seat bottom 120 to translate forward and aft. In response to the user locking the locking mechanism 190, such as by releasing the button, the pinch spring may tighten around the rod, locking seat bottom 120 in place. Those skilled in the art will appreciate that many different types of locking mechanisms may be consistent with the present disclosure.

Seat 100 may be powered, such as by an electric motor or a hydraulic system. The motor may cause seat bottom 120 to translate fore and aft, and the interaction between cam follower 141 and guide ramp 132 may cause seat back 110 to recline.

Spine 140 and guide ramp 132 are fully enclosed within seat back 110 and seat bottom 120. Thus, spine 140 and guide ramp 132 are not visible to a user. Thus, the reclining mechanism is more aesthetically pleasing or contains fewer exposed parts which may interfere with users or other people or objects in the area of seat 100.

## Claims

1. A seat (100) for an aircraft comprising:
a base (130);
a guide ramp (132) coupled to the base, wherein the guide ramp comprises a guide channel (134);
a seat bottom (120) coupled to the base via a sliding mechanism;
a seat back (110) pivotably coupled to the seat bottom about a pivot (150) coupled to an aft end (121) of the seat bottom (120);
a spine (140) located at least partially within the seat back and the seat bottom, wherein the spine (140) comprises a cam follower (141) comprising a cam roller (142) which is located within the guide channel (134);
a return spring (170) coupled to a portion of the base (130) and a portion of the seat bottom (120), the return spring (170) being configured to cause the seat bottom (120) to translate in the aft direction and to cause the seat back (110) to return to the upright position, absent a counteracting force;
wherein the spine (140) is a unitary component;
wherein the spine is configured to rotate about the pivot (150) via the cam follower (141);
wherein the guide channel (134) is configured to force the cam roller (142) to move away from the
base (130) in a positive y-direction in response to the seat bottom (120) translating in a forward direction;
wherein the seat back (110) is configured to recline in response to forward translation of the seat bottom (120);
wherein the guide ramp (132) is configured to apply a torque on the spine (140);
wherein the spine (140) is located within the seat back (110) and the guide ramp (132) is located within the seat bottom (120); the spine (140) and the guide ramp (132) being fully enclosed within the seat back (110) and the seat bottom (120), such that the spine (140) and guide ramp (132) are not visible to a user.

2. The seat (100) of claim 1, further comprising a locking mechanism (190) configured to prevent the seat bottom (120) from translating.

## Patentansprüche

1. Sitz (100) für ein Luftfahrzeug, umfassend:
eine Basis (130);
eine Führungsrampe (132), die mit der Basis gekoppelt ist, wobei die Führungsrampe einen Führungskanal (134) umfasst;
eine Sitzfläche (120), die über einen Gleitmechanismus mit der Basis gekoppelt ist;
eine Sitzlehne (110), die mit der Sitzfläche schwenkbar um einen Drehzapfen (150) gekoppelt ist, der mit einem hinteren Ende (121) der Sitzfläche (120) gekoppelt ist;
ein Rückgrat (140), das mindestens teilweise innerhalb der Sitzlehne und der Sitzfläche liegt, wobei das Rückgrat (140) einen Nockenstößel (141) umfasst, der eine Nockenrolle (142) umfasst, die innerhalb des Führungskanals (134) liegt;
eine Rückstellfeder (170), die mit einem Abschnitt der Basis (130) und einem Abschnitt der Sitzfläche (120) gekoppelt ist, wobei die Rückstellfeder (170) dazu konfiguriert ist, zu bewirken, dass sich die Sitzfläche (120) in der Rückwärtsrichtung verschiebt und zu bewirken, dass die Sitzlehne (110) mangels einer entgegenwirkenden Kraft in die aufrechte Position zurückkehrt;
wobei das Rückgrat (140) eine unitäre Komponente ist;
wobei das Rückgrat dazu konfiguriert ist, sich über den Nockenstößel (141) um den Drehzapfen (150) zu drehen;
wobei der Führungskanal (134) dazu konfiguriert ist, die Nockenrolle (142) dazu zu zwingen, sich von der Basis (130) in einer positiven y-Richtung als Reaktion darauf wegzubewegen, dass sich die Sitzfläche (120) in einer Vorwärtsrichtung verschiebt;
wobei die Sitzlehne (110) dazu konfiguriert ist, sich als Reaktion auf eine Vorwärtsverschiebung der Sitzfläche (120) zurückzuneigen;
wobei die Führungsrampe (132) dazu konfiguriert ist, ein Drehmoment an das Rückgrat (140) anzulegen;
wobei das Rückgrat (140) innerhalb der Sitzlehne (110) liegt und die Führungsrampe (132) innerhalb der Sitzfläche (120) liegt; das Rückgrat (140) und die Führungsrampe (132) vollständig in der Sitzlehne (110) und der Sitzfläche (120) derart eingeschlossen sind, dass das Rückgrat (140) und die Führungsrampe (132) für einen Benutzer nicht sichtbar sind.

2. Sitz (100) nach Anspruch 1, der weiter einen Verriegelungsmechanismus (190) umfasst, der dazu konfiguriert ist, zu verhindern, dass sich die Sitzfläche (120) verschiebt.

## Revendications

1. Siège (100) pour aéronef comprenant :
une embase (130) ;
une rampe de guidage (132) couplée à l'embase, dans lequel la rampe de guidage comprend un canal de guidage (134) ;
un fond de siège (120) couplé à l'embase via un mécanisme coulissant ;
un dossier de siège (110) couplé de manière pivotante au fond de siège autour d'un pivot (150) couplé à une extrémité arrière (121) du fond de siège (120) ;
une colonne (140) située au moins partiellement à l'intérieur du dossier de siège et du fond de siège, dans lequel la colonne (140) comprend un suiveur de came (141) comprenant un galet de came (142) qui est situé à l'intérieur du canal de guidage (134) ;
un ressort de rappel (170) couplé à une partie de l'embase (130) et à une partie du fond de siège (120), le ressort de rappel (170) étant configuré pour amener le fond de siège (120) à translater vers l'arrière et pour amener le dossier de siège (110) à revenir à la position verticale, en l'absence d'une force antagoniste ;
dans lequel la colonne (140) est un composant unitaire ;
dans lequel la colonne est configurée pour tourner autour du pivot (150) via le suiveur de came (141) ;
dans lequel le canal de guidage (134) est configuré pour forcer le galet de came (142) à s'éloigner de l'embase (130) dans une direction y positive en réponse à la translation du fond de siège (120) dans une direction vers l'avant ;
dans lequel le dossier de siège (110) est configuré pour s'incliner en réponse à une translation vers l'avant du fond de siège (120) ;
dans lequel la rampe de guidage (132) est configurée pour appliquer un couple sur la colonne (140) ;
dans lequel la colonne (140) est située à l'intérieur du dossier de siège (110) et la rampe de guidage (132) est située à l'intérieur du fond de siège (120) ; la colonne (140) et la rampe de guidage (132) étant entièrement enfermées à l'intérieur du dossier de siège (110) et du fond de siège (120), de sorte que la colonne (140) et la rampe de guidage (132) ne sont pas visibles pour un utilisateur.

2. Siège (100) selon la revendication 1, comprenant en outre un mécanisme de verrouillage (190) configuré pour empêcher le fond de siège (120) de translater.
